# EUROPÄISCHE PATENTSCHRIFT

(11) **EP 2 809 946 B1**
(45) Veröffentlichungstag und Bekanntmachung des Hinweises auf die Patenterteilung: **07.03.2018**
(21) Anmeldenummer: 13705098.5
(22) Anmeldetag: 30.01.2013
(51) Int. Cl.: F03D 1/00, E04G 3/24, E04G 3/28, B62D 57/024, F03D 17/00, F03D 80/50

(54) **KLETTERROBOTER FÜR MASTEN**
CLIMBING ROBOT FOR MASTS
ROBOT GRIMPEUR POUR MÂTS

(30) Priorität: 31.01.2012 DE 102012001725
(43) Veröffentlichungstag der Anmeldung: 10.12.2014
(60) Teilanmeldung: 15000598.1
(73) Patentinhaber: Fachhochschule Aachen, 52066 Aachen (DE)
(72) Erfinder: BAGHERI, Mohsen, 52072 Aachen (DE); DAHMANN, Peter, 52074 Aachen (DE)
(74) Vertreter: Cohausz Hannig Borkowski Wißgott
(86) Internationale Anmeldenummer: PCT/EP2013/000270
(87) Internationale Veröffentlichungsnummer: WO 2013/113494

(56) Entgegenhaltungen:
- EP-A2- 2 281 770
- WO-A1-2006/077358

## Beschreibung

Die Erfindung betrifft einen Kletterroboter für Masten, insbesondere für Windkraftanlagen, umfassend wenigstens eine erste Tragvorrichtung und wenigstens eine zweite Tragvorrichtung, wobei der Abstand der Tragvorrichtungen zueinander mittels wenigstens eines Linearantriebs in vertikaler Richtung änderbar ist und jede Tragvorrichtung wenigstens eine Spannvorrichtung umfasst, mittels der die jeweilige Tragvorrichtung am Mast festspannbar und vom Mast lösbar ist, wobei zumindest ein Teil der Spannvorrichtungen, bevorzugt jede der Spannvorrichtungen wenigstens ein Bandelement umfasst, das sich zwischen zwei an der Tragvorrichtung angeordneten Anlage- oder Befestigungsstellen erstreckt und in Umfangsrichtung flexibel um einen Mast/Turm herumlegbar und an dessen Mantelfläche anlegbar ist und wenigstens einen Spannantrieb umfasst, mit dem die Länge des wenigstens einen Bandelementes zwischen den Anlage- oder Befestigungsstellen vergrößerbar und verkleinerbar ist.

Ein Kletterroboter dieser gattungsgemäßen Art kann z.B. bei Windkraftanlagen zum Einsatz kommen, um an dem Mast (ggfs. auch als Turm bezeichnet) einer Windkraftanlage herauf- oder herabzuklettern, z.B. zu Wartungszwecken. Erfindungsgemäß ist die Anwendung jedoch nicht auf Windkraftanlagen und deren Masten beschränkt. Ein erfindungsgemäßer Kletterroboter kann vielmehr an jeglichem Mast klettern, unabhängig davon, was von dem Mast getragen ist oder um was für einen Mast es sich handelt.

Sofern demnach im Folgenden die Anwendung der Erfindung hinsichtlich Kletterroboter am Beispiel einer Windkraftanlage beschrieben wird, ist dies nicht als Einschränkung zu verstehen, sondern nur als mögliches, stellvertretend auch für andere Anwendungsfälle genanntes Beispiel zu sehen.

Windkraftanlagen sind zu einem wichtigen Bestandteil unserer Energieversorgung geworden. Die Windkrafttechnologie unterliegt wie alle anderen Technologien (z.B. Luftfahrt, Raumfahrt oder Automobil etc.) bestimmten Anordnungen hinsichtlich Entwicklung, Produktion, Betrieb und Instandhaltung.

Dabei wird dem sicheren Betrieb und der sicheren Instandhaltung besondere Aufmerksamkeit gewidmet. Hier sind insbesondere die periodischen Inspektionen der Rotorblätter und der Windtürme (Masten) zu nennen. Gleiche oder ähnliche Anforderungen gelten auch für andere Anlagenarten. Um diese Inspektionen ausführen zu können, braucht die Industrie bestimmte Anlagen, die alle Anforderungen von Funktionssicherheit bis Wirtschaftlichkeit der Instandhaltung als Komplettlösung erfüllen können.

Die Anforderung der Wirtschaft und Technologie ist, möglichst viele Arbeitsschritte in einem Arbeitsgang am Ort des Betriebs, kostengünstig, schnell, präzise und sicher zu erledigen. Die dazu notwendigen heutigen Hilfsmittel eignen sich bisher nicht für einen solchen Vor-Ort-Einsatz. Unser Ansatz mit dieser Lösung ist genau diese Anforderungen mit diesem Kletterroboter zu erfüllen.

Die Anforderung der periodischen Inspektion der Rotorblätter begrenzt sich nicht nur darauf, die sichtbaren Schäden zu beheben, sondern auch alle strukturellen Veränderungen wie Risse oder Delamination unter der Oberfläche (Lack) zu erkennen, bewerten und bei Bedarf zu beheben, damit ein sicherer Betrieb bis zur nächsten Inspektion gewährleistet werden kann. Um diesen Anforderungen zu genügen, müssen Arbeitsbedingung geschaffen werden, die den Einsatz geeigneter Prüfungs- und Reparaturmethoden (NDT, ZFP etc.) ermöglichen. Dabei ist wichtig an den Windkraftanlagen eine Arbeitsbedingung zu schaffen, damit viele Arbeitsschritte, die der Zeit in einer Reparaturhalle ausgeführt werden, Vorort zweckdienlich unabhängig der Wetterbedingungen durchgeführt werden können.

Heute kann weder eine zerstörungsfreie Prüfung (ZFP) (None Destructive Testing (NDT)) noch eine Rotorblattreparatur am Windrad vollständig durchgeführt werden. Um aber den Kostendruck der Betreiber von Windkraftanlagen in einem wirtschaftlich effizienten Rahmen zu halten, müssen unbedingt die Ausfallzeiten minimiert werden. Das kann nur mit einer umfassenden Lösung für die Inspektion- und Reparatur an den Windkraftanlagen ermöglicht werden.

Die periodisch geforderte Inspektion von Rotorblättern oder von Windkrafttürmen nach DIN EN 61400-23 (VDE 0127-23) verlangt aber eine lückenlose Untersuchung des Rotors auf weitere Schäden, die möglicherweise produktionsbedingt oder durch dynamische Belastung und häufig durch Betriebsvibration auftreten können. Die ZFP am Rotorblatt erweist sich durchaus schwierig aber wie in der Dissertation von Frau Dr.-Dipl.-Geophys. Anne Jüngert beschrieben, gibt es Möglichkeiten ZFP am Blatt durchführen zu können.

Ein Kletterroboter der eingangs genannten gattungsgemäßen Art ist aus der Publikation WO 2006/077358 A1 bekannt. Hier werden Spannbacken mittels durch Winden betätigten Spannseilen an einem Mast verspannt. Die Haltekräfte werden maßgeblich über die Spannbacken auf den Mast ausgeübt und nur zum Teil über die am Umfangsbereich des Mastes anliegenden Spannseile. Beim Klettern müssen die Spannseile mit den Spannbacken vom Mast abgehoben werden.

Ein weiterer Kletterroboter ist aus der Veröffentlichung DE 10 2005 053 782 B4 bekannt. Die Spannvorrichtung wird hier durch Traversen gebildet, die gegeneinander verschiebbar sind und mit denen Spannträger / Spannpratzen an mehreren Stellen gegen die Mastoberfläche gedrückt werden, um Haftkräfte zwischen Kletterroboter und Mast zu erzeugen.

Hier ist es als nachteilig zu bewerten, dass der Kletterroboter sein Einsatzgebiet nur bei bestimmten vorgegebenen Mastdurchmessern hat und ansonsten in den Dimensionen umkonstruiert werden müsste und dass die haltenden Kräfte in diesem Fall mit jeweils nur 4 um den Umfang eines Mastes verteilten Spannträgern / Spannpratzen aufgebracht wird.

Aufgabe der Erfindung ist es einen Kletterroboter bereit zu stellen, der eine hohe Einsatzflexibilität aufweist, hohe Sicherheit und Stabilität aufweist und an einer Vielzahl unterschiedlicher Masten oder Türme zum Einsatz kommen kann. Weiterhin ist es die Aufgabe auf eine einfache Weise die Bandelemente längs eines Mastes / Turmes zu verschieben.

Gelöst wird die Aufgabe erfindungsgemäß mit einem Kletterroboter der eingangs genannten Art, bei dem an einem Bandelement, insbesondere einem jeweiligen Bandelement wenigstens ein Rollwagen oder Gleitwagen angeordnet ist, insbesondere über den Umfang verteilt mehrere Rollwagen oder Gleitwagen angeordnet sind, mit dem/denen ein Bandelement bei einem Lösen der Verspannung von der Mast.-/Turmoberfläche abhebbar ist.

Wesentlich bei dieser Ausführung eines Kletterroboters ist es, dass die haltenden Kräfte nicht nur "punktuell" mit ein paar wenigen Spannträgern / Spannpratzen auf die Umfangsfläche eines Mastes oder eines Turmes aufgebracht werden, sondern, dass die Kräfte über einen wesentlichen Teil des gesamten Umfangs eingeleitet werden, was dadurch erzielt wird, dass in Umfangsrichtung flexible, also z.B. biegbare oder gelenkig verstellbare Bandelemente um den Mast oder Turm herum gelegt werden. Aufgrund der Flexibilität legt sich demnach ein Bandelement einer erfindungsgemäßen Spannvorrichtung an die Mantelfläche eines Mastes oder Turmes an.

Dies hat auch den Vorteil, dass ein erfindungsgemäßer Kletterroboter nicht hinsichtlich der konkreten Querschnittsform des Mastes oder Turmes angepasst werden muss, weil eine solche Anpassung im jeweiligen Einzelfall automatisch aufgrund der Flexibilität der Bandelemente erfolgt. Hierdurch ist es auch problemlos möglich, an Masten zu klettern, deren Querschnitt sich entlang der Erstreckung ändert, z.B. konisch ist und im Durchmesser ändert.

Der mit einem erfindungsgemäßen Kletterroboter umschlossene Querschnitt, in dem ein Mast oder Turm beim Klettern einliegt, ergibt sich zwischen den jeweiligen Bandelementen und den Tragvorrichtungen. Hierbei werden die Tragvorrichtungen in einen verspannten Zustand an die Mast- oder Turmmantelfläche herangezogen, wobei weiterhin ausgehend von einer Anlenk- oder Befestigungsstelle an einer Tragvorrichtung ein Bandelement um den Mast/Turm herumgelegt wird und wieder an einer Anlenk- oder Befestigungsstelle zur Tragvorrichtung geführt wird.

Der größte Teil des insgesamt durch Tragvorrichtung und Bandelemente/n umschlossenen Querschnitts wird demnach vom Bandelement gebildet, so dass die wirkenden Kräfte zum Halten durch wesentlich größere Flächen auf den Mast/Turm aufgebracht werden als im Stand der Technik. Hier ist die wirkende Fläche gegeben durch die Höhe eines Bandelementes und die Länge des Kontaktes zwischen Bandelement und Mast/Turmoberfläche, sowie die Fläche, in der ein jeweiliges Tragelement anliegt. Die Haftreibung wird demnach gegenüber dem Stand der Technik signifikant erhöht.

Eine Verspannung einer Tragvorrichtung des Kletterroboters kann dadurch erfolgen, dass mit einem Spannantrieb die Länge eines oder mehrerer Bandelemente verkürzt wird, insbesondere die effektiv wirkende Länge eines Bandelementes zwischen den Anlenk- oder Befestigungsstellen, insbesondere so dass hierdurch die dem Turm / Mast zuweisende Innenfläche eines jeweiligen Bandelementes an die Mantelfläche des Turmes / Mastes herangezogen wird und diese kontaktiert. Bevorzugt werden demnach die zum Halten notwendigen Kräfte überwiegend durch den direkten Kontakt zwischen Bandelement und Mantelfläche aufgebracht.

Bei einer Tragvorrichtung, bei welcher der wenigstens eine Spannantrieb außerhalb der Tragvorrichtung liegt, also z.B. nicht eingehaust ist, kann eine solche vorgenannte Anlenk- oder Befestigungsstelle z.B. direkt durch ein Antrieb oder einen Teil davon gebildet werden, z.B. durch eine Wickelrolle, eine Umlenkrolle oder ähnliches.

Es kann in einer bevorzugten Ausführung auch vorgesehen sein, dass wenigstens ein Spannantrieb im Inneren einer Tragvorrichtung angeordnet ist. Die Tragvorrichtung kann somit eine Einhäusung des wenigstens einen Spannantriebs bilden oder eine solche Einhäusung umfassen. Es werden sodann für jedes Bandelement zwei Ausnehmungen vorgesehen sein, an denen ein Bandelement in die Tragvorrichtung ein- bzw. aus dieser austritt. Das jeweiliges Bandelement reicht durch die Ausnehmungen in das Innere der Tragvorrichtung hinein, und wird im inneren durch den wenigstens einen Spannantrieb gespannt oder entlastet bzw. entspannt. Mit dem wenigstens einen Spannantrieb wird somit die außerhalb der Tragvorrichtung liegende Länge des Bandelementes vergrößerbar oder verkleinerbar. Hinter einer solchen vorgenannte Ausnehmung kann hier eine Anlenkstelle im Inneren der Tragvorrichtung liegen. Die Ausnehmung kann durch eine Gleithülse gebildet sein, durch die ein Bandelement hindurchgleiten kann, ggfs. sogar anlagefrei ist.

Die grundsätzliche Kletterfunktion wird dadurch bewirkt, dass eine Tragvorrichtung mit der wenigstens einen Spannvorrichtung am Mast/Turm durch Verspannung, insbesondere somit Längenverringerung des wenigstens einen Bandelementes befestigt wird. Die nicht verspannte, somit zum Mast/Turm lose Tragvorrichtung wird mit wenigstens einem Linearantrieb in die gewünschte Bewegungsrichtung verschoben, also nach oben oder nach unten. Nach dieser Verschiebung wird die gerade verschobene Tragvorrichtung durch Verspannung befestigt und die zuvor verspannte Tragvorrichtung gelöst. Die dann gerade gelöste Tragvorrichtung kann mit dem wenigstens einen Linearantrieb in der gewünschten Bewegungsrichtung nachgeführt werden. Somit ergibt sich eine Art Schreitantrieb, bei dem die Tragvorrichtungen wechselweise verspannt, gelöst und linear verschoben werden.

Die lineare Verschiebung kann durch wenigstens einen linearen Antrieb erfolgen mit dem der vertikale Abstand zwischen den wenigstens zwei Tragvorrichtungen, insbesondere zwischen einer Minimal- und Maximalstellung geändert werden kann. Beispielsweise kann ein solcher Antrieb als ein Spindelantrieb mit einer Gewindespindel ausgebildet sein, wobei die Spindel durch einen Motor in einer Tragvorrichtung gedreht wird und die andere Tragvorrichtung an einer auf der Spindel laufenden Mutter befestigt ist. Eine solche Spindel kann bevorzugt selbsthemmend sein. Der Antrieb kann auch durch ein hydraulisch oder pneumatisch arbeitendes Zylinder-Kolben-Aggregat ausgebildet sein, das abwechselnd mit Druck beaufschlagt und entlastet wird. Ebenso sind Zahnstangenantriebe möglich oder sonstige Antriebs-Ausführungen, die eine lineare Bewegung in vertikaler Richtung zwischen den Tragvorrichtungen bewirken.

In einer einfachsten Ausführung kann es vorgesehen sein, dass ein Bandelement einer Tragvorrichtung einseitig ortsfest mit der Tragvorrichtung verbunden ist und das anderen Ende oder ein anderer Bereich lose befestigt ist, das heißt, dass an diesem losen Ende / Bereich ein Antrieb wirkt bzw. angreift, um die Spannung aufzubauen oder zu lösen. Diese konstruktiv einfache Ausgestaltung hat lediglich den Nachteil dass bei einem Verspannungs- und Lösungsvorgang der Kletterroboter um die Mast/Turm herumläuft. Dem könnte in der Summe aller Verspannungs- und Lösungsvorgänge entgegen gewirkt werden, wenn die Bandelemente der verschiedenen Tragvorrichtungen an verschiedenen Seiten ortfest befestigt sind und sich somit das Herumlaufen bei den beiden Tragvorrichtungen gegenläufig ist. Ebenso könnte eine Kompensation erzielt werden, wenn an einer Tragvorrichtung zwei Bandelemente in der Spannvorrichtung vorgesehen sind, die an gegenüberliegenden Seiten ihre ortsfesten und beweglichen Enden haben.

In besonders bevorzugter Ausgestaltung kann es vorgesehen sein, dass ein Bandelement, insbesondere im Inneren einer Tragvorrichtung zwei Bandbereiche oder zwei Bandenden aufweist, an denen ein gemeinsamer Antrieb wirkt, insbesondere durch ein Ziehen/Schieben oder Auf-/Abwickeln des Bandelementes oder jeweils ein separater Antrieb wirkt, insbesondere durch ein Ziehen/Schieben oder Auf-/Abwickeln des Bandelementes. Hierbei kann jedes Bandelement einer Tragvorrichtung seinen eigenen Antrieb bzw. seine eigenen Antriebe aufweisen, es kann jedoch auch vorgesehen sein, dass bei mehreren Bandelementen an einer Tragvorrichtung alle Bandelemente einen Antrieb haben oder alle Bandelemente an ihren auf gleicher Seite liegenden Bandenden / Bandbereichen gemeinsame Antriebe haben.

Bei den vorgenannten Ausführungen, bei denen beide Bandbereiche bzw. Bandenden eines Bandelements angetrieben sind, kann bewirkt werden, dass an den beiden Enden gleichzeitig die Verspannung erzeugt oder gelöst wird. Ein Herumlaufen des Kletterroboters um den Mast / Turm wird so verhindert.

Ein Herumlaufen kann jedoch auch bewusst erzeugt werden, wenn von den beiden grundsätzlich antreibbaren Bereichen /Enden bei einem aktuellen Verspannungs- oder Lösungsschritt nur ein Bereich / Ende angetrieben wird.

Wenn die Bandenden / Bandbereiche durch einen gemeinsamer Antrieb angetrieben werden, kann dies z.B. mit einer umschaltbaren Kupplung realisiert werden, mit der z.B. durch Ansteuerung einstellbar ist, ob der gemeinsame Antrieb an dem einem oder anderen der beiden Bandbereiche / Bandenden oder an beiden gleichzeitig wirkt.

Bei separaten Antrieben für die Bandenden / Bandbereiche eines Bandelementes hingegen kann nur einer der Antriebe angesteuert werden, um ein Herumlaufen um den Mast zu bewirken, ansonsten jedoch arbeiten beide Antriebe synchron.

Die Antriebe können z.B. Zahnräder antreiben, deren Zähne in Ausnehmungen der Bandelemente eingreifen, um Zug- oder Schubkräfte aufzubringen und so ein Spannen oder Lösen zu bewirken.

Eine konstruktive einfache Ausgestaltung ergibt sich, wenn mit dem wenigstens einen Spannantrieb wenigstens eine Wickelrolle angetrieben wird, auf der das jeweilige Bandelement aufgewickelt wird, um ein Verspannen zu erzeugen oder abgewickelt wird, um ein Lösen zu erzeugen.

Bei zwei angetriebenen Bandenden eines Bandelementes können in einer Ausführung beide Bandenden auf einer gemeinsamen Wickelrolle auf- und abgewickelt werden. Es kann auch vorgesehen sein, für jedes Bandende eine eigene Wickelrolle vorzusehen, insbesondere wobei die beiden Wickelrollen einen gemeinsamen oder getrennte Spannantriebe haben, wie zuvor erwähnt.

In einer bevorzugten Weiterbildung, insbesondere der Ausführungen mit Wickelrollen kann es vorgesehen sein, dass das Band jeweils vor dem Bandbereich oder dem Bandende, an dem der wenigstens eine Antrieb wirkt, in seiner Erstreckungsrichtung an einer jeweiligen Umlenkstelle, insbesondere im Inneren der Tragvorrichtung, umgelenkt ist. Für diese Umlenkung kann z.B. eine Umlenkrolle zum Einsatz kommen.

Diese Ausführung hat den Vorteil, dass zwischen zwei den jeweiligen Bandbereichen / Bandenden zugeordneten Umlenkrollen ein kleinerer Abstand, insbesondere ein kleinerer Abstand in Umfangsrichtung des Mastes / Turmes realisierbar ist als zwischen den Wickelrollen oder sonstigen Antriebselemente zum Spannen / Lösen.

Es kann so bewirkt werden, dass der von einem Bandelement zwischen den Umlenkstellen umschlossene Querschnitt über mehr als 300 Grad, bevorzugt mehr als 330 Grad geschlossen ist. Ein Bandelement kann daher mit dieser Weiterbildung über eine größere Länge am Umfang eines Mastes oder Turmes anliegen.

Um eine sichere und definierte Anlage einer jeweiligen Tragvorrichtung an seiner zu einem Mast/Turm weisenden Seite bei einer Verspannung zu erzielen kann es vorgesehen sein, dass eine jeweilige Tragvorrichtung wenigstens zwei in Umfangsrichtung eines Mastes/Turmes beabstandete Anlageelemente aufweist, mittels denen eine Tragvorrichtung bei einem Spannvorgang an der äußeren Mast-/Turmfläche abstützbar ist. Diese Anlageelemente können z.B. Anlageflächen haben, die z.B. tangential an die Mast- oder Turmoberfläche anlegbar sind. Ebenso kann es vorgesehen sein, die Anlageflächen gekrümmt, z.B. als Teilzylinderfläche auszubilden.

In einer Weiterbildung kann es hier vorgesehen sein, dass jedes der Anlageelemente in Richtung auf die Mast-/Turmoberfläche und zurück bewegbar ist, insbesondere dass alle gleichzeitig bewegbar sind. Für diese Bewegungsmöglichkeit können die Anlageelemente wenigstens einen, z.B. einen gemeinsamen Antrieb oder auch getrennte Antriebe aufweisen, mit denen die Anlageelemente von einer Tragvorrichtung in Richtung zum Mast / Turm bewegbar und zurückziehbar sind.

Z.B. wenn eine Tragvorrichtung vom Turm / Mast gelöst wird, um diese mit dem wenigstens einen Linearantrieb in der vertikalen Richtung zu bewegen, können so vor der Bewegung mit dem wenigstens einen Antrieb der Anlageelemente diese von der Mast- / Turmoberfläche weggezogen werden, so dass eine Tragvorrichtung bei ihrer vertikalen Bewegung zum Mast / Turm anlagefrei ist. Vor oder während einer Verspannung können die Anlageelement sodann an die Oberfläche des Mastes / Turm durch eine darauf zugerichtete Bewegung angestellt werden.

Es kann hier weiterhin vorgesehen sein dass der Abstand der Anlageelemente in Umfangsrichtung des Mastes/Turmes größer ist als der Abstand der Umlenkstellen des Bandelementes bei einer Kombination der diesbezüglichen Ausführungsvarianten.

In bevorzugter Weiterbildung, die mit jeder der vorgenannten Ausführungen kombinierbar ist können zwei Bandelemente verschiedener Tragvorrichtungen mittels ansteuerbarer, in der Länge änderbarer Linearantriebe verbunden sein, insbesondere auf einer von den Tragvorrichtungen wegweisenden Seite eines Mastes/Turmes. Ein Bandelement einer aktuell nicht verspannten Tragvorrichtung kann so gegen den Herabrutschen am Mast / Turm in Schwerkraftrichtung gesichert werden, da es über den in der Länge änderbaren Linearantrieb zusätzlich an einem Bandelemente befestigt ist, dass aktuell verspannt und somit am Mast / Turm fest ist.

Wird die gelöste Tragvorrichtung in vertikaler Richtung bewegt durch eine Ansteuerung des die Tragvorrichtungen verbindenden Linearantriebs, so kann gleichzeitig auch eine Ansteuerung des oder der die Bandelemente der verschiedenen Tragvorrichtungen verbindenden Linearantriebe erfolgen, so dass diese ihre Länge synchron zueinander und zu dem wenigstens einen Linearanrieb der Tragvorrichtungen ändern, also verringern oder vergrößern je nach Bewegungsrichtung. So werden auch die maximal von den Tragvorrichtungen entfernten Bandelementbereiche gegen die Schwerkraft gestützt und in Bewegungsrichtung der losen Tragvorrichtung mitbewegt.

Erfindungsgemäß ist es vorgesehen, dass an einem jeweiligen Bandelement wenigstens ein Rollwagen oder Gleitwagen angeordnet ist, insbesondere über den Umfang verteilt mehrere Rollwagen oder Gleitwagen angeordnet sind, mit dem/denen ein Bandelement bei einem Lösen der Verspannung von der Mast.-/Turmoberfläche abhebbar ist. Ein solches Abheben des Bereiches eines Bandelementes, in welchem ein solcher Wagen angeordnet ist, kann z.B. durch eine konstante Kraftbeaufschlagung erfolgen, welche das Bandelement zum Wagen zieht, wenn die Verspannung im Bandelement gelöst wird. Ein gelöstes und abgehobenes Bandelement kann sodann einfacher längs des Mastes / Turmes verschoben werden, wobei bevorzugt nur der jeweilige Wagen auf der Mast-/Turmoberfläche rollt oder gleitet.

Ein Rollwagen oder Gleitwagen kann z.B. ein Brückenelement aufweisen, welches ein Bandelement in vertikaler Richtung überbrückt und mit seinen beiden Enden mittels dort angebrachter Rollen oder Gleitsteinen an eine Mast-/Turmoberfläche anlegbar/angelegt ist, wobei die zum Mast/Turm weisende Seite des Brückenelementes mittels einer Zugfeder mit dem Bandelement verbunden ist. Diese Verbindung kann z.B. erzeugt sein durch eine Hülse, an der die Zugfeder befestigt ist und in der das Bandelement einliegt.

Die Kletterfunktion eines erfindungsgemäßen Kletterroboters ist bereits dann sichergestellt, wenn zwei Tragvorrichtungen in vertikaler Richtung übereinander angeordnet sind. Ein stabilere Anordnung kann erzielt werden, wenn die beiden Tragvorrichtung ineinander verschränkt angeordnet sind.

Dies kann z.B. dadurch erzielt werden, dass wenigstens eine der beiden Tragvorrichtungen wenigstens zwei in vertikaler Richtung zueinander beabstandete und untereinander verbundene Tragelemente aufweist, wobei jedes der Tragelemente wenigstens eine Spannvorrichtung aufweist und zwischen zwei solchen Tragelementen die andere der beiden Tragvorrichtungen vollständig oder mit zumindest einem von mehreren in vertikaler Richtung zueinander beabstandeten und untereinander verbundenen Tragelementen angeordnet ist.

Beispielsweise können dabei zwei Tragelemente von einer der Tragvorrichtungen durch vertikale Schienen miteinander verbunden sind, an denen die andere Tragvorrichtung oder eines von mehreren Tragelementen der anderen Tragvorrichtung geführt ist.

Ein Bandelement, welches hier zum Einsatz kommen kann, kann z.B. ausgebildet sein als ein Gliederband mit mehreren Bandgliedern, die um eine vertikale Achse schwenkbar miteinander verbunden sind, z.B. auch eine Kette oder durch ein Flachband aus einem Metall oder einem Faser-Kunststoff-Verbund oder besonders bevorzugt als ein textiles Band, insbesondere ein Gurt.

Ein textiles Bandelement hat den Vorteil, dass durch die Verwebung der einzelnen Bandfasern eine Flexibilität nicht nur in Umfangsrichtung erreicht wird, sondern auch in vertikaler Richtung. Ein solches textiles Bandelement kann sich somit besonders gut auch an Masten oder Türme anlegen, die in vertikaler Richtung konisch geformt sind, da sich an einem textilen Bandelement um unteren Umfangsbereich problemlos eine andere den Mast / Turm kontaktierende Umfangslänge einstellen kann also am oberen Bereich. Ein textiles Bandelement formt sich somit an eine Konizität problemlos an. Dies ist besonders vorteilhaft bei Windkraftanlagen, die üblicherweise konische Türme haben.

Ausführungsformen der Erfindung werden nachfolgend anhand von Figuren beschrieben. Es zeigen:
- Figur 1:: eine Windkraftanlage mit einem erfindungsgemäßen Kletterroboter und einer daran befestigten mobilen Wartungshalle
- Figur 2:: den Kletterroboter mit Wartungshalle in Aufsicht auf die Mast-/Turmseite
- Figuren 3:: mehrere Ansichten des Kletterroboters mit Wartungshalle
- Figur 4:: den Linearantrieb der Tragvorrichtungen
- Figuren 5:: eine Spannvorrichtung eines von zwei Tragelementen der einen Tragvorrichtung
- Figuren 6:: die Spannvorrichtungen der anderen Tragvorrichtung
- Figur 7:: einen Antrieb einer Spannvorrichtung
- Figur 8:: die Anlageelemente einer Tragvorrichtung
- Figur 9:: einen an Bandelementen anbringbaren Rollwagen

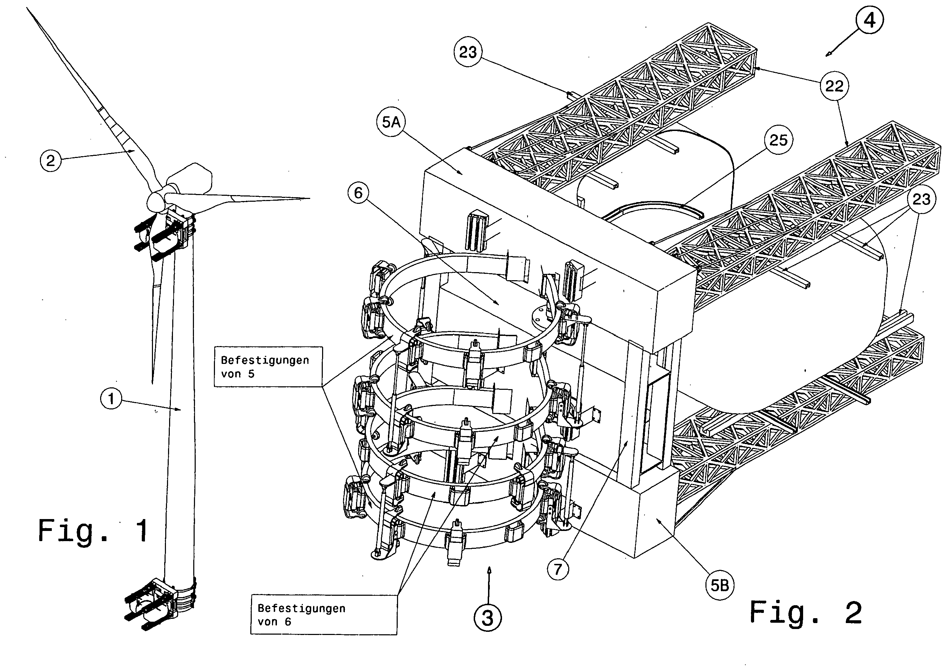

Die Figur 1 zeigt in einer Übersicht die mögliche Anwendung eines erfindungsgemäßen Kletterroboters mit einer daran befestigten Wartungshalle bei einer Windkraftanlage mit einem Mast 1 bzw. Turm 1, an dem der Kletterroboter schreiten, d.h. nicht-kontinuierlich herauf- oder herabklettern kann, z.B. um Wartungsarbeiten an einem Rotorblatt 2 vornehmen zu können.

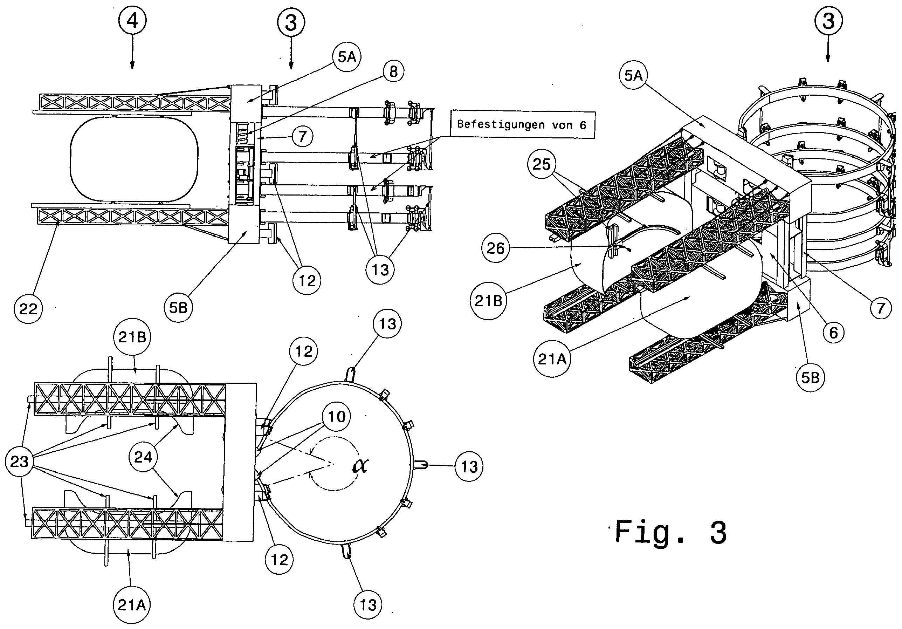

Die Figuren 2 und 3 zeigen den Kletterroboter 3 und die Wartungshalle 4 in detaillierterer Darstellung.

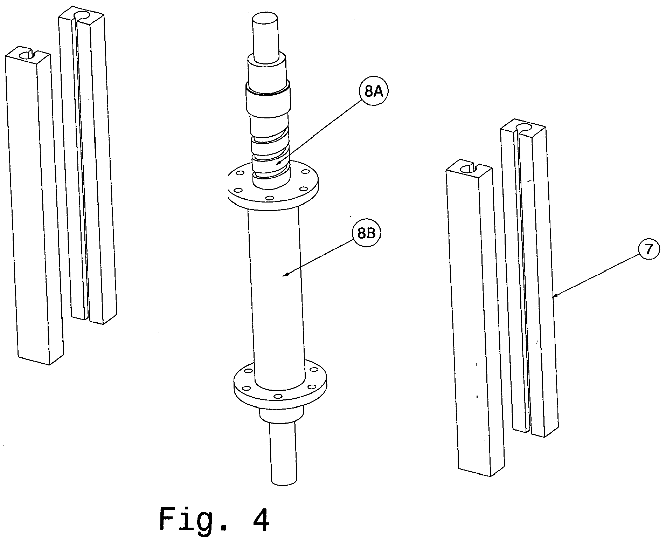

Der Kletterroboter 3 umfasst eine erste Tragvorrichtungen 5 und eine zweite Tragvorrichtung 6. Die erste Tragvorrichtung 5 ist unterteilt in zwei Tragelemente 5A und 5B die in vertikaler Richtung beabstandet und durch Führungsschienen 7 verbunden sind, an denen die Tragvorrichtung 6 geführt ist, die zwischen den Tragelementen 5A und 5B mit einem Linearantrieb 8 auf- und abbewegt werden kann. Dieser Linearantrieb 8 ist in Figur 4 detaillierter dargestellt und umfasst eine Spindel 8A, die durch einen Motor gedreht werden kann die beidseits an der Tragvorrichtung 5 befestigt ist. Die Spindel trägt eine Mutter 8B, die mit der Tragvorrichtung 6 verbunden ist. Durch motorische Spindeldrehung wird die Mutter und Tragvorrichtung 6 verschoben zwischen zwei Endstellungen. Dabei ist die Tragvorrichtung 6 in oder an den vertikalen Schienen 7 geführt, die die beiden Tragelemente der Tragvorrichtung 5 an den äußeren Kanten verbinden.

Die Tragvorrichtung 5 umfasst zwei Spannvorrichtungen aus mehreren Bauelementen, wobei eine Spannvorrichtung an dem oberen Tragelement 5A und eine an dem unteren Tragelement 5B angeordnet ist. Die Tragvorrichtung 6 hat ebenso zwei Spannvorrichtungen.

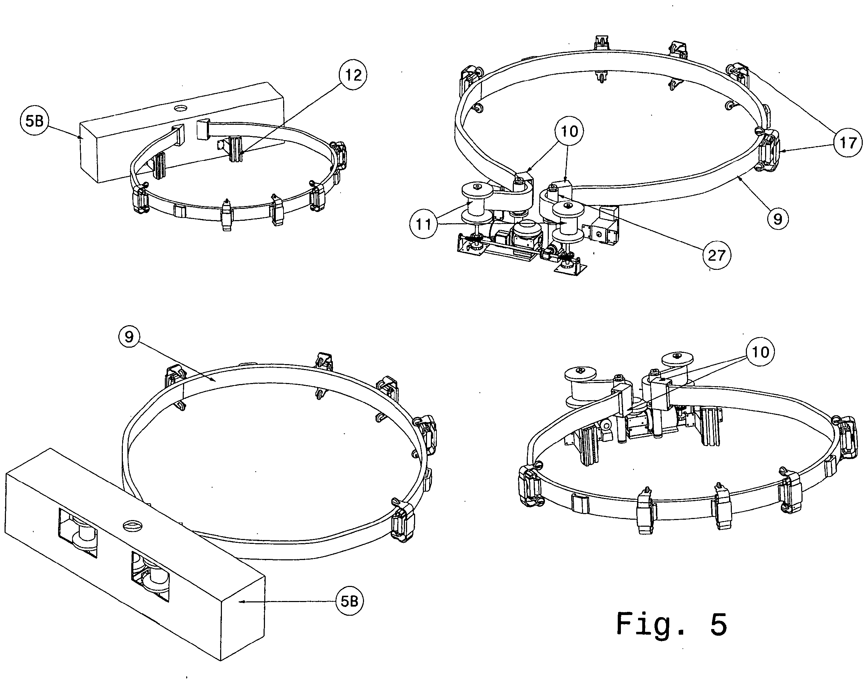

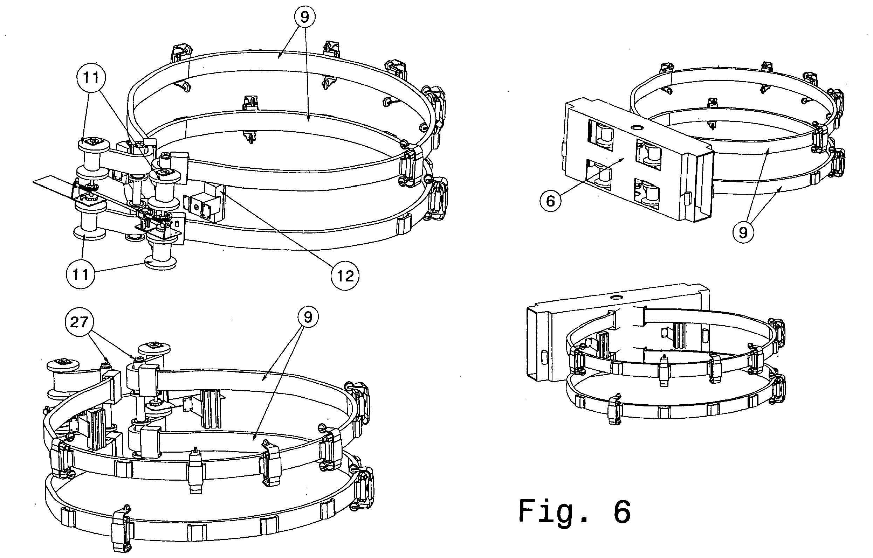

Gemäß den Figuren 5 und 6 umfasst jede Spannvorrichtung ein Bandelement 9. Jedes Bandelement kann - wie Figur 1 zeigt - um den äußeren Umfang eines Mastes 1 herumgelegt werden und liegt zumindest im verspannten Zustand an diesem an. Um das Erzeugen der Spannung sowie das Lösen der Spannung zu bewirken werden die Bandenden jedes Bandelementes 9 durch Ausnehmungen und darin angeordnete Gleithülsen 10 in das Innere einer Tragvorrichtung 5/6 geführt und dort jedes Ende auf einer eigenen Wickelrolle 11 auf- oder abgewickelt.

Örtlich zwischen einer Gleithülse 10 und einer Wickelrolle 11 wird das Bandelement 9 in seiner Richtung mittels einer Umlenkrolle 27 umgelenkt. Die Umlenkrollen haben einem geringeren Abstand als die Wickelrollen. Trotz der groß bauenden Wickelrollen 11 und der für deren Antrieb nötigen Bauteile kann so erreicht werden, dass ein Bandelement über einen Winkel α > 300 Grad am Umfang eines Mastes 1 anliegt, wie es Figur 3 visualisiert. Hierdurch wird eine besonders große Kraftübertragungsfläche erzielt.

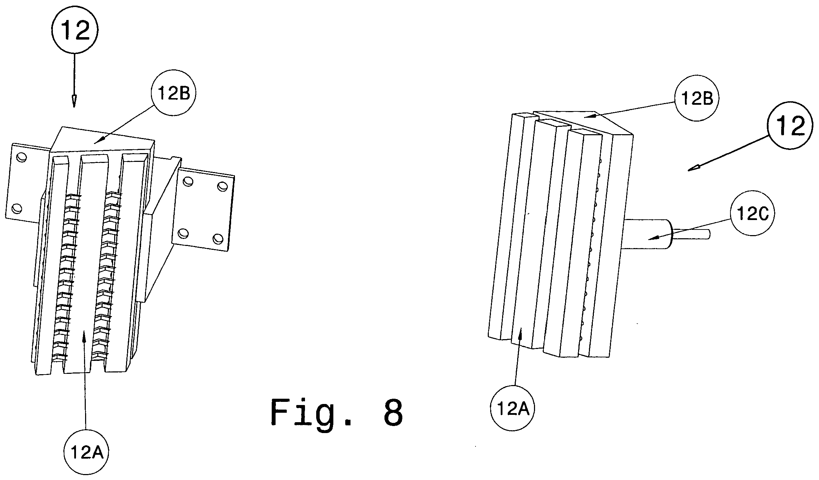

Die Tragvorrichtungen haben ihrerseits jeweils Anlageelemente 12, die in Figur 8 gezeigt sind und deren Flächen 12A sich hier tangetial an die Oberfläche eines Mastes / Turm anlegen können. Prismenförmige Körper 12B weisen auf einer ihrer Prismenflächen die Anlagefläche 12A oder Anlageflächen 12A auf und sind hier durch einen Antrieb von der Tragvorrichtung 5/6 in Richtung zum Mast schiebbar oder von diesem wegziehbar. Hierfür können Schubstangen 12C verwendet werden, an denen ein Antrieb ankoppelt.

Die Bewegung des Kletterroboters erfolgt derart, dass eine der Tragvorrichtungen 5/6 am Mast / Turm 1 verspannt wird durch Ausfahren der Anlageelemente in Richtung zum Mast und Aufwickeln der Bandelemente 9 dieser Tragvorrichtung, wodurch der vom Bandelement 9 umschlossene Querschnitt verkleinert und so ein Mast fest umschlossen wird. Nach der Verspannung wird die andere Tragvorrichtung gelöst durch Abwickeln des Bandes von den Wickelrollen 11 und Einziehen der Anlageelemente 12.

Mit dem Linearantrieb 8 wird die gelöste Tragvorrichtung relativ zur festen Tragvorrichtung linear in vertikaler Richtung nach oben oder unten verschoben. Dabei werden synchron zur Bewegungsweite der Tragvorrichtungen zueinander zusätzlich Linearantriebe 13 ein- oder ausgefahren, welche die Bandelemente 9 verschiedener Tragvorrichtungen verbinden. Hierdurch werden die losen Bandelemente 9 gegen die Schwerkraft in horizontaler Lage gehalten und mitbewegt. Die Linearantriebe 13 sind bevorzugt nur in der von den Tragvorrichtungen 5/6 abgewandter Querschnittshälften angeordnet.

Die verschobene Tragvorrichtung wird sodann verspannt und die zuvor verspannte gelöst und in gleicher Weise nachgeführt.

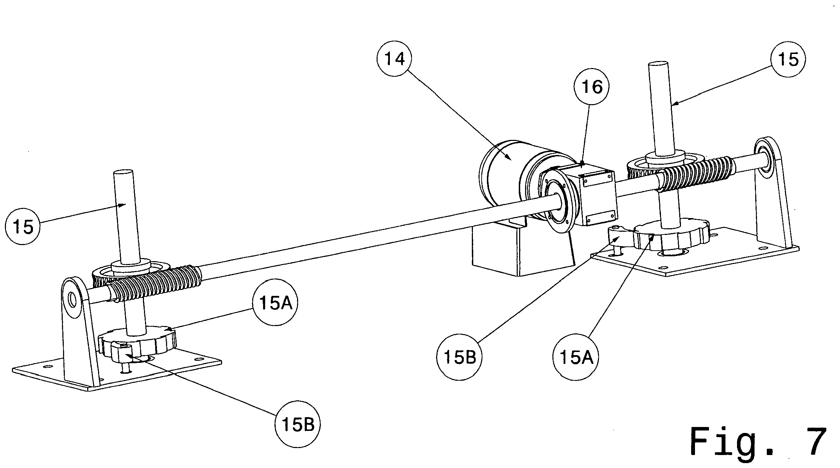

Die Figur 7 zeigt eine mögliche Mechanik eines Antriebs der Wickelrollen 11. Mit einem Motor 14 werden über ein Getriebe zwei Wickelwellen 15 gleichzeitig angetrieben oder durch eine Kupplung 16 nur eine der Wickelwellen 15 an den Motor angekoppelt. Die Wickelwellen können einen Rastmechanismus 15A aufweisen, der nur in einer Drehrichtung freilaufend ist, nämlich derjenigen, die eine Verspannung eines Bandelementes 9 bewirkt. Für ein Lösen kann es vorgesehen sein, dass ein Rastelement 15B, welches die umgekehrte Drehung der Welle 15 blockiert, mittels eines Aktors (hier nicht gezeigt) außer Eingriff gebracht wird. So wird sichergestellt, dass bei einem Stromausfall eine bestehende Verspannung sich nicht löst.

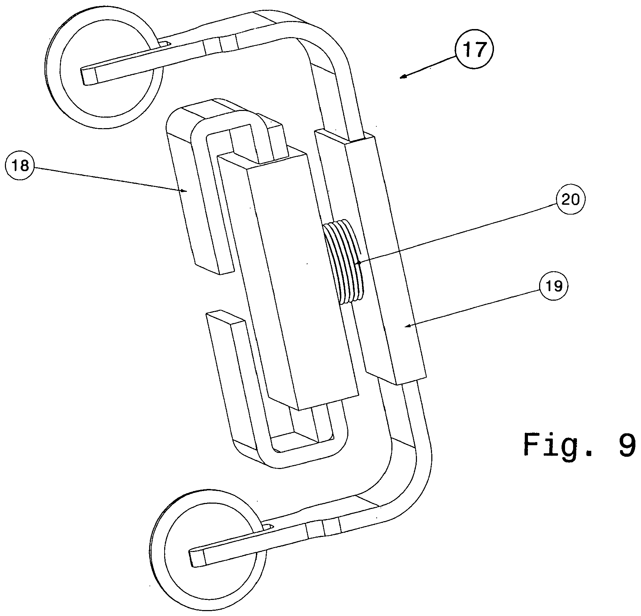

Figur 9 zeigt einen Rollwagen 17, der in mehrfacher gleicher Ausführung am Bandelement 9 über den Umfang des Mastes verteilt angebracht ist. In einer hier geschlitzten Haltehülse 18 ist ein Bereich des Bandelementes 9 aufgenommen und die Hülse 18, somit auch das Bandelement 9 über eine Zugfeder 20 an einer Brückenelement 19 befestigt, dass das Bandelement 9 vertikal überbrückt, wobei deren Enden Rollen aufweisen, die auf der Oberfläche des Mastes/ Turmes rollen, wenn eine Tragvorrichtung mit dem gelösten Bandelement 9 bewegt wird.

Bei Lösen und der nachlassenden Spannung im Bandelement 9 wird diese durch die ziehende Feder 20 von der Mastoberfläche abgezogen, so dass das Bandelement nur rollend weiterbewegt wird. Wird hingegen die Spannung durch Aufwickeln des Bandelementes mit den Wickelrollen 11 vergrößert, so wird das Bandelement gegen die Feder 20 auf die Manteloberfläche des Mastes / Turmes gezogen und liegt dort fest an, wobei die Feder 20 maximal gespannt ist für den nächsten Abziehvorgang.

## Patentansprüche

1. Kletterroboter für Masten/Türme (1), insbesondere für Windkraftanlagen, umfassend wenigstens eine erste Tragvorrichtung (5) und wenigstens eine zweite Tragvorrichtung (6), wobei der Abstand der Tragvorrichtungen (5,6) zueinander mittels wenigstens eines Linearantriebs (7,8) in vertikaler Richtung änderbar ist und jede Tragvorrichtung (5,6) wenigstens eine Spannvorrichtung (9,10,11) umfasst, mittels der die jeweilige Tragvorrichtung (5,6) am Mast/Turm (1) festspannbar und vom Mast/Turm (1) lösbar ist, wobei zumindest ein Teil der Spannvorrichtungen (9,10,11), bevorzugt jede der Spannvorrichtungen (9,10,11) wenigstens ein Bandelement (9) umfasst, das sich zwischen zwei an der Tragvorrichtung (5,6) angeordneten Anlage- oder Befestigungsstellen (10,11) erstreckt und in Umfangsrichtung flexibel um einen Mast/Turm (1) herumlegbar und an dessen Mantelfläche anlegbar ist und wenigstens einen Spannantrieb (14) umfasst, mit dem die Länge des wenigstens einen Bandelementes (9) zwischen den Anlage- oder Befestigungsstellen (10,11) vergrößerbar und verkleinerbar ist, **dadurch gekennzeichnet, dass** an einem Bandelement (9), insbesondere einem jeweiligen Bandelement wenigstens ein Rollwagen (17) oder Gleitwagen angeordnet ist, insbesondere über den Umfang verteilt mehrere Rollwagen (17) oder Gleitwagen angeordnet sind, mit dem/denen ein Bandelement (9) bei einem Lösen der Verspannung von der Mast.-/Turmoberfläche abhebbar ist.

2. Kletterroboter nach Anspruch 1, **dadurch gekennzeichnet, dass** ein Rollwagen (17) oder Gleitwagen ein Brückenelement (19) aufweist, das ein Bandelement (9) in vertikaler Richtung überbrückt und mit seinen beiden Enden mittels dort angebrachter Rollen oder Gleitsteinen an eine Mast-/Turmoberfläche anlegbar/angelegt ist und die zum Mast/Turm weisende Seite des Brückenelementes (19) mittels einer Zugfeder (20) mit dem Bandelement (9) verbunden ist, insbesondere mittels einer Hülse (18), an der die Zugfeder (20) befestigt ist und in der das Bandelement (9) einliegt.

3. Kletterroboter nach einem der vorherigen Ansprüche, **dadurch gekennzeichnet, dass** die zum Halten wirkenden Kräfte auf den Mast/Turm (1) aufgebracht sind durch eine wirkende Fläche, die gegeben ist durch die Höhe eines jeweiligen Bandelementes und die Länge des Kontaktes zwischen jeweiligem Bandelement und Mast/Turmoberfläche, sowie die Fläche, in der eine jeweilige Tragvorrichtung am Mast/Turm (1) anliegt.

4. Kletterroboter nach einem der vorherigen Ansprüche, **dadurch gekennzeichnet, dass** der wenigstens eine Spannantrieb (14) im Inneren einer Tragvorrichtung (5,6) angeordnet ist und ein jeweiliges Bandelement (9) durch Ausnehmungen in das Innere der Tragvorrichtung (5,6) hineinreicht, wobei mit dem wenigstens einen Spannantrieb (14) die außerhalb der Tragvorrichtung liegende Länge des Bandelementes (9) vergrößerbar oder verkleinerbar ist.

5. Kletterroboter nach einem der vorherigen Ansprüche, **dadurch gekennzeichnet, dass** ein Bandelement (9), insbesondere im Inneren einer Tragvorrichtung (5,6) zwei Bandbereiche oder zwei Bandenden aufweist, an denen
a. ein gemeinsamer Antrieb (14) wirkt, insbesondere durch ein Ziehen/Schieben oder Auf-/Abwickeln des Bandelementes (9) oder
b. jeweils ein separater Antrieb wirkt, insbesondere durch ein Ziehen/Schieben oder Auf-/Abwickeln des Bandelementes (9)
insbesondere wobei jedes Bandelement (9) seinen eigenen Antrieb / seine eigenen Antriebe aufweist.

6. Kletterroboter nach Anspruch 5, **dadurch gekennzeichnet, dass** ein gemeinsamer Antrieb (14) mittels einer umschaltbaren Kupplung (16) wahlweise an einem der beiden Bandbereiche / einem der beiden Bandenden oder an beiden gleichzeitig wirkt.

7. Kletterroboter nach Anspruch 5 oder 6, **dadurch gekennzeichnet, dass** das Bandelement (9) jeweils vor dem Bandbereich oder dem Bandende, an dem der wenigstens eine Antrieb (14) wirkt, in seiner Erstreckungsrichtung an einer jeweiligen Umlenkstelle (27), insbesondere im Inneren der Tragvorrichtung (5,6), umgelenkt ist.

8. Kletterroboter nach Anspruch 7, **dadurch gekennzeichnet, dass** der vom Bandelement (9) zwischen den Umlenkstellen (27) umschlossene Querschnitt des Turms/Mastes (1) über mehr als 300 Grad, bevorzugt mehr als 330 Grad geschlossen ist.

9. Kletterroboter nach einem der vorherigen Ansprüche, **dadurch gekennzeichnet, dass** eine Tragvorrichtung (5,6) an seiner zu einem Mast/Turm (1) weisenden Seite wenigstens zwei in Umfangsrichtung eines Mastes/Turmes (1) beabstandete Anlageelemente (12) aufweist, mittels denen eine Tragvorrichtung (5,6) bei einem Spannvorgang an der äußeren Mast-/Turmfläche abstützbar ist.

10. Kletterroboter nach Anspruch 9, **dadurch gekennzeichnet, dass** jedes der Anlageelemente (12), in Richtung auf die Mast-/Turmoberfläche und zurück bewegbar ist, insbesondere dass alle gleichzeitig bewegbar sind.

11. Kletterroboter nach Anspruch 9 oder 10, **dadurch gekennzeichnet, dass** der Abstand der Anlageelemente (12) in Umfangsrichtung des Mastes/Turmes (1) größer ist als der Abstand der Umlenkstellen (27) des Bandelementes (9).

12. Kletterroboter nach einem der vorherigen Ansprüche, **dadurch gekennzeichnet, dass** zwei Bandelemente (9) verschiedener Tragvorrichtungen (5,6) mittels ansteuerbarer, in der Länge änderbarer Linearantriebe (13) verbunden sind, insbesondere auf einer von den Tragvorrichtungen (5,6) wegweisenden Seite eines Mastes/Turmes (1).

13. Kletterroboter nach einem der vorherigen Ansprüche, **dadurch gekennzeichnet, dass** wenigstens eine der beiden Tragvorrichtungen (5,6) wenigstens zwei in vertikaler Richtung zueinander beabstandete und untereinander verbundene Tragelemente (5A, 5B) aufweist, wobei jedes der Tragelemente (5A, 5B) wenigstens eine Spannvorrichtung (9,10,11) aufweist und zwischen zwei Tragelementen (5A, 5B) die andere der beiden Tragvorrichtungen (6) vollständig oder mit zumindest einem von mehreren in vertikaler Richtung zueinander beabstandeten und untereinander verbundenen Tragelementen angeordnet ist.

14. Kletterroboter nach Anspruch 13, **dadurch gekennzeichnet, dass** zwei Tragelemente (5A, 5B) von einer der Tragvorrichtungen (5,6) durch vertikale Schienen (7) miteinander verbunden sind, an denen die andere Tragvorrichtung (6) oder eines von mehreren Tragelementen der anderen Tragvorrichtung (6) geführt ist.

15. Kletterroboter nach einem der vorherigen Ansprüche, **dadurch gekennzeichnet, dass** ein Bandelement (9) ausgebildet ist als:
c. ein Gliederband mit mehreren Bandgliedern, die um eine vertikale Achse schwenkbar miteinander verbunden sind oder
d. ein Flachband aus einem Metall oder einem Faser-Kunststoff-Verbund oder
e. ein textiles Band, insbesondere ein Gurt

## Claims

1. Climbing robot for masts/towers (1), in particular for wind turbines, comprising at least one first supporting device (5) and at least one second supporting device (6), wherein the distance of the supporting devices (5, 6) from each other is changeable in the vertical direction by means of at least one linear drive (7, 8), and each supporting device (5, 6) comprises at least one clamping device (9, 10, 11) by means of which the respective supporting device (5, 6) can be firmly clamped to the mast/tower (1) and can be released from the mast/tower (1), wherein at least some of the clamping devices (9, 10, 11), preferably each of the clamping devices (9, 10, 11), comprises at least one band element (9) which extends between two contact or fastening points (10, 11) arranged on the supporting device (5, 6) and can be placed flexibly in the circumferential direction about a mast/tower (1) and can be placed against the lateral surface thereof and comprises at least one clamping drive (14) with which the length of the at least one band element (9) between the contact or fastening points (10, 11) can be increased and can be reduced, **characterized in that** at least one rolling carriage (17) or sliding carriage is arranged on a band element (9), in particular on a respective band element, in particular a plurality of rolling carriages (17) or sliding carriages are arranged thereon in a manner distributed over the circumference and is/are used to lift off a band element (9) from the mast/tower surface when the bracing is released.

2. Climbing robot according to Claim 1, **characterized in that** a rolling carriage (17) or sliding carriage has a bridge element (19) which spans a band element (9) in the vertical direction and can be placed/is placed with its two ends by means of rollers or sliding blocks attached there against a mast/tower surface, and that side of the bridge element (19) which faces the mast/tower is connected to the band element (9) by means of a tension spring (20), in particular by means of a sleeve (18) to which the tension spring (20) is fastened and in which the band element (9) lies.

3. Climbing robot according to either of the preceding claims, **characterized in that** the forces acting for holding purposes are applied to the mast/tower (1) by an acting surface which is provided by the height of a respective band element and the length of the contact between the respective band element and mast/tower surface, and the surface in which a respective supporting device lies against the mast/tower (1).

4. Climbing robot according to one of the preceding claims, **characterized in that** the at least one clamping drive (14) is arranged in the interior of a supporting device (5, 6), and a respective band element (9) reaches through recesses into the interior of the supporting device (5, 6), wherein, with the at least one clamping drive (14), that length of the band element (9) which lies outside the supporting device can be increased or reduced.

5. Climbing robot according to one of the preceding claims, **characterized in that** a band element (9), in particular in the interior of a supporting device (5, 6), has two band regions or two band ends on which
a. a common drive (14) acts, in particular by pulling/pushing or winding up/unwinding the band element (9), or
b. a separate drive acts in each case, in particular by pulling/pushing or winding up/unwinding the band element (9),
in particular wherein each band element (9) has its dedicated drive/its dedicated drives.

6. Climbing robot according to Claim 5, **characterized in that** a common drive (14) acts by means of a switchable clutch (16) either on one of the two band regions/one of the two band ends or on both at the same time.

7. Climbing robot according to Claim 5 or 6, **characterized in that** the band element (9) in each case before the band region or the band end on which the at least one drive (14) acts is deflected in its direction of extent at a respective deflecting point (27), in particular in the interior of the supporting device (5, 6).

8. Climbing robot according to Claim 7, **characterized in that** the cross section of the tower/mast (1) that is enclosed by the band element (9) between the deflecting points (27) is closed over more than 300 degrees, preferably more than 330 degrees.

9. Climbing robot according to one of the preceding claims, **characterized in that** a supporting device (5, 6) on its side facing a mast/tower (1) has at least two contact elements (12) which are spaced apart in the circumferential direction of a mast/tower (1) and by means of which a supporting device (5, 6) can be supported on the outer mast/tower surface during a clamping operation.

10. Climbing robot according to Claim 9, **characterized in that** each of the contact elements (12) is movable in the direction of the mast/tower surface and back, in particular **in that** all of the contact elements (12) are movable at the same time.

11. Climbing robot according to Claim 9 or 10, **characterized in that** the distance of the contact elements (12) in the circumferential direction of the mast/tower (1) is greater than the distance of the deflecting points (27) of the band element (9).

12. Climbing robot according to one of the preceding claims, **characterized in that** two band elements (9) of different supporting devices (5, 6) are connected by means of activatable, length-changeable linear drives (13), in particular on a side of a mast/tower (1) that faces away from the supporting devices (5, 6) .

13. Climbing robot according to one of the preceding claims, **characterized in that** at least one of the two supporting devices (5, 6) has at least two supporting elements (5A, 5B) which are spaced apart from one another in the vertical direction and are connected to one another, wherein each of the supporting elements (5A, 5B) has at least one clamping device (9, 10, 11), and the other of the two supporting devices (6) is arranged between two supporting elements (5A, 5B) completely or with at least one of a plurality of supporting elements which are spaced apart from one another in the vertical direction and are connected to one another.

14. Climbing robot according to Claim 13, **characterized in that** two supporting elements (5A, 5B) of one of the supporting devices (5, 6) are connected to each other by vertical rails (7) on which the other supporting device (6) or one of a plurality of supporting elements of the other supporting device (6) is guided.

15. Climbing robot according to one of the preceding claims, **characterized in that** a band element (9) is designed as:
c. a link band having a plurality of band links which are connected to one another so as to be pivotable about a vertical axis, or
d. a flat band composed of a metal or a fibre/plastic composite, or
e. a textile band, in particular a strap.

## Revendications

1. Robot grimpeur pour mâts/tours (1), en particulier pour éoliennes, comprenant au moins un premier dispositif de support (5) et au moins un deuxième dispositif de support (6), la distance entre les dispositifs de support (5, 6) pouvant être variée au moyen d'au moins un entraînement linéaire (7, 8) dans la direction verticale et chaque dispositif de support (5, 6) comprenant au moins un dispositif de serrage (9, 10, 11), au moyen duquel le dispositif de support respectif (6, 5) peut être serré fixement au mât/à la tour (1) et peut être desserré du mât/de la tour (1), au moins une partie des dispositifs de serrage (9, 10, 11), de préférence chacun des dispositifs de serrage (9, 10, 11) comprenant au moins un élément de bande (9) qui s'étend entre deux points d'application ou de fixation (10, 11) disposés sur le dispositif de support (5, 6) et qui peut être passé de manière flexible dans la direction périphérique autour d'un mât/d'une tour (1) et qui peut être appliqué contre sa surface d'enveloppe et qui comprend au moins un entraînement de serrage (14) avec lequel la longueur de l'au moins un élément de bande (9) peut être augmentée et réduite entre les points d'application ou de fixation (10, 11), **caractérisé en ce qu'**au moins un chariot de roulement (17) ou un chariot de glissement est disposé au niveau d'un élément de bande (9), en particulier de chaque élément de bande, en particulier plusieurs chariots de roulement (17) ou chariots de glissement sont répartis sur la périphérie, avec lequel/ lesquels un élément de bande (9) peut être soulevé de la surface du mât/de la tour dans le cas d'un relâchement du serrage.

2. Robot grimpeur selon la revendication 1, **caractérisé en ce qu'**un chariot de roulement (17) ou un chariot de glissement présente un élément de pont (19) qui surmonte un élément de bande (9) dans la direction verticale et qui est appliqué/peut être appliqué avec ses deux extrémités au moyen de rouleaux ou de coulisseaux montés à cet endroit contre une surface de mât/de tour, et le côté de l'élément de pont (19) tourné vers le mât/vers la tour est connecté à l'élément de bande (9) au moyen d'un ressort de traction (20), en particulier au moyen d'une douille (18) à laquelle est fixé le ressort de traction (20) et dans laquelle s'insère l'élément de bande (9).

3. Robot grimpeur selon l'une quelconque des revendications précédentes, **caractérisé en ce que** les forces de retenue agissant sur le mât/sur la tour (1) sont appliquées par une force d'action qui est définie par la hauteur d'un élément de bande respectif et par la longueur du contact entre chaque élément de bande et la surface du mât/de la tour, ainsi que par la surface sur laquelle un dispositif de support respectif s'applique contre le mât/la tour (1).

4. Robot grimpeur selon l'une quelconque des revendications précédentes, **caractérisé en ce que** l'au moins un entraînement de serrage (14) est disposé à l'intérieur d'un dispositif de support (5, 6) et un élément de bande respectif (9) s'étend à travers des évidements à l'intérieur du dispositif de support (5, 6), la longueur de l'élément de bande (9) située à l'extérieur du dispositif de support pouvant être augmentée ou réduite avec l'au moins un entraînement de serrage (14) .

5. Robot grimpeur selon l'une quelconque des revendications précédentes, **caractérisé en ce qu'**un élément de bande (9), en particulier à l'intérieur d'un dispositif de support (5, 6), présente deux régions de bande ou deux extrémités de bande, au niveau desquelles
a. agit un entraînement commun (14), en particulier par traction/poussée ou par enroulement/déroulement de l'élément de bande (9) ou
b. agit à chaque fois un entraînement séparé, en particulier par traction/poussée ou par enroulement/déroulement de l'élément de bande (9) ,
en particulier chaque élément de bande (9) présentant son propre entraînement/ses propres entraînements.

6. Robot grimpeur selon la revendication 5, **caractérisé en ce qu'**un entraînement commun (14) agit au moyen d'un accouplement commutable (16) de manière sélective au niveau de l'une des deux régions de bande/au niveau de l'une des deux extrémités de bande ou au niveau des deux simultanément.

7. Robot grimpeur selon la revendication 5 ou 6, **caractérisé en ce que** l'élément de bande (9), à chaque fois avant la région de bande ou avant l'extrémité de bande au niveau de laquelle agit l'au moins un entraînement (14), est dévié dans sa direction d'étendue au niveau d'un point de déviation respectif (27), en particulier à l'intérieur du dispositif de support (5, 6).

8. Robot grimpeur selon la revendication 7, **caractérisé en ce que** la section transversale de la tour/du mât (1) entourée par l'élément de bande (9) entre les points de déviation (27) est fermée sur plus de 300 degrés, de préférence sur plus de 330 degrés.

9. Robot grimpeur selon l'une quelconque des revendications précédentes, **caractérisé en ce qu'**un dispositif de support (5, 6) présente, au niveau de son côté tourné vers un mât /une tour (1), au moins deux éléments d'appui (12) espacés dans la direction périphérique d'un mât/d'une tour (1), au moyen desquels un dispositif de support (5, 6) peut être supporté contre la surface extérieure du mât/de la tour lors d'une opération de serrage.

10. Robot grimpeur selon la revendication 9, **caractérisé en ce que** chacun des éléments d'appui (12) peut être déplacé dans la direction de la surface du mât/de la tour et dans la direction inverse, en particulier **en ce que** tous peuvent être déplacés simultanément.

11. Robot grimpeur selon la revendication 9 ou 10, **caractérisé en ce que** la distance entre les éléments d'appui (12) dans la direction périphérique du mât/de la tour (1) est supérieure à la distance entre les points de déviation (27) de l'élément de bande (9).

12. Robot grimpeur selon l'une quelconque des revendications précédentes, **caractérisé en ce que** deux éléments de bande (9) de dispositifs de support différents (5, 6) sont connectés au moyen d'entraînements linéaires (13) commandables, de longueur variable, en particulier sur un côté d'un mât/d'une tour (1) opposé aux dispositifs de support (5, 6).

13. Robot grimpeur selon l'une quelconque des revendications précédentes, **caractérisé en ce qu'**au moins un des deux dispositifs de support (5, 6) présente au moins deux éléments de support (5A, 5B) espacés l'un de l'autre dans la direction verticale et connectés l'un à l'autre, chacun des éléments de support (5A, 5B) présentant au moins un dispositif de serrage (9, 10, 11) et entre deux éléments de support (5A, 5B), l'autre des deux dispositifs de support (6) étant disposé complètement ou avec au moins un parmi plusieurs éléments de support espacés les uns des autres dans la direction verticale et connectés les uns aux autres.

14. Robot grimpeur selon la revendication 13, **caractérisé en ce que** deux éléments de support (5A, 5B) de l'un des dispositifs de support (5, 6) sont connectés l'un à l'autre par des rails verticaux (7), sur lesquels est guidé l'autre dispositif de support (6) ou l'un de plusieurs éléments de support de l'autre dispositif de support (6).

15. Robot grimpeur selon l'une quelconque des revendications précédentes, **caractérisé en ce qu'**un élément de bande (9) est réalisé sous forme de :
c. une bande à maillons avec plusieurs maillons de bande qui sont connectés les uns aux autres de manière à pouvoir pivoter autour d'un axe vertical ou
d. une bande plate constituée de métal ou d'un composite en plastique renforcé par des fibres ou
e. une bande textile, en particulier une sangle.
